# FASCICULE DE BREVET EUROPEEN

(11) **EP 1 301 898 B1**
(45) Date de publication et mention de la délivrance du brevet: **14.06.2006**
(21) Numéro de dépôt: 01949172.9
(22) Date de dépôt: 17.07.2001
(51) Int. Cl.: G06K 19/07

(54) **TRANSPONDEUR PASSIF A FAIBLE CONSOMMATION**
PASSIVER TRANSPONDER MIT NIEDRIGEM ENERGIEVERBRAUCH
LOW-POWER PASSIVE TRANSPONDER

(30) Priorité: 21.07.2000 FR 0009625
(43) Date de publication de la demande: 16.04.2003
(73) Titulaire: MBBS Holding SA, 2035 Corcelles (CH)
(72) Inventeur: BUI, Ngoc-Chau, CH-2046 Fontaines (CH); WERNER, Christian, CH-2025 Chez-le-Bart (CH); GAUDENZI, Yves, CH-2300 La Chaux-de-Fonds (CH); BENOIT, Martial, CH-2318 Brot-Plamboz (CH); CASSI, Vincent, CH-2314 La Sagne (CH); MIRUS, Christian, CH-2023 Gorgier (CH); CHATELAIN, Jean-Daniel, CH-1741 Cottens (CH); KOWALCZUK, Jacques, F-25370 Jougne (FR)
(74) Mandataire: GLN
(86) Numéro de dépôt international: PCT/CH2001/000446
(87) Numéro de publication internationale: WO 2002/009028

(56) Documents cités:
- EP-A- 0 732 663
- US-A- 5 313 198

## Description

La présente invention se rapporte aux transpondeurs passifs à couplage électromagnétique, plus particulièrement du type ayant une faible consommation.

Elle concerne plus particulièrement un transpondeur radio-fréquence pour une identification sans contact, au moyen d'un lecteur. Ce transpondeur comprend:
- une antenne,
- un circuit analogique qui comporte un condensateur, un convertisseur de courant alternatif en courant continu, un modulateur et un démodulateur,
- un circuit logique de commande, et
- une mémoire.
Ce transpondeur est agencé de manière à ce que:
- l'antenne et le condensateur forment, ensemble, un circuit résonnant,
- l'antenne reçoit un premier signal provenant du lecteur, de type sinusoïdal, présentant une tension de crête, modulé et porteur de commandes, et émet un deuxième signal, porteur d'une réponse à ces commandes,
- le convertisseur transforme le premier signal en un signal redressé, pour assurer l'alimentation du transpondeur.
Dans les transpondeurs connus, le circuit analogique comporte, en outre, un extracteur d'horloge, de type bas ou de type haut.

Lorsque l'extracteur est de type bas, la valeur de seuil est constante. Elle est choisie suffisamment basse pour que la liaison entre lecteur et transpondeur puisse se faire même lorsque les conditions de transmission sont difficiles. Elle doit, toutefois, être suffisamment haute, comme décrit dans EP 0732663, pour que le temps d'amortissement, nécessaire pour atteindre la valeur de seuil, ne soit pas trop long lorsque les conditions de transmission sont bonnes. Il en résulte un compromis qui implique que le temps de pause entre deux bits doit, au moins, être égal à une dizaine de périodes du signal sinusoïdal.

Avec un extracteur de type haut, ce temps de pause peut être raccourci, tout en conservant une grande souplesse d'utilisation, du fait que la valeur de seuil est variable, définie en référence à la tension de crête du signal reçu par le transpondeur. De la sorte, le temps compris entre la fin du signal émis par le lecteur et sa détection par l'extracteur d'horloge est de l'ordre de la période.

Le temps compris entre le début d'une pause du signal émis par le lecteur et sa détection par l'extracteur d'horloge est donc fortement réduit. Cela peut, par contre, augmenter le temps compris entre le début du signal émis par le lecteur et sa détection par l'extracteur d'horloge.

L'invention est définie selon la revendication 1.

De manière avantageuse, l'extracteur de type haut comporte:
- un transistor d'entrée de type PMOS et relié à l'antenne,
- un inverseur polarisé comportant deux transistors l'un de type PMOS et l'autre de type NMOS, muni d'une entrée et d'une sortie, et commandé par le transistor d'entrée,
- un redresseur de valeur de crête, formé d'une diode et d'un condensateur,
- deux sources de courant alimentant respectivement le transistor d'entrée et l'inverseur polarisé, et
- un inverseur simple,

Un mode de réalisation préféré est défini selon la revendication 2.

D'autres avantages et caractéristiques de l'invention ressortiront de la description qui va suivre, faite en regard du dessin annexé, dans lequel:
- La figure 1 représente, schématiquement, un transpondeur selon l'invention et un lecteur destiné à identifier le transpondeur;
- La figure 2 montre une partie du transpondeur de la figure 1, et plus particulièrement son circuit analogique;
- La figure 3 illustre respectivement en a et en b, les schémas d'extracteurs bas et haut,
- La figure 4 montre, respectivement, sur les lignes a à d, les courbes de la tension mesurée aux bornes de l'antenne du lecteur, de l'antenne du transpondeur et des signaux d'horloge haut et bas.
- La figure 5 représente, de manière schématique, un lecteur pour transpondeurs selon l'invention, une partie de celui-ci étant illustrée de manière plus détaillée sur la figure 6.

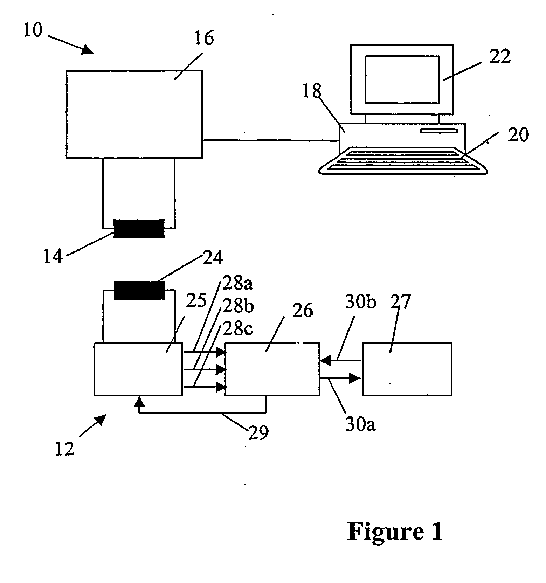

L'ensemble, représenté à la figure 1, comporte un lecteur 10 et un transpondeur 12. Le lecteur 10 comprend plus précisément une antenne 14 émettant un signal électromagnétique Lx, une électronique de commande 16, avantageusement un microcontrôleur, ainsi qu'un ordinateur 18 relié à un clavier 20 et à un écran 22.

Le transpondeur 12 est formé d'une antenne 24, d'un circuit analogique 25, d'un circuit logique de commande 26 et d'une mémoire 27. Le circuit analogique 25, qui sera décrit de manière plus détaillée ci-après, est relié à l'antenne, pour recevoir le signal que capte cette dernière. Ce signal assure trois fonctions, soit:
- L'alimentation électrique du transpondeur,
- La fourniture d'un signal d'horloge, et
- La transmission des commandes.

Après traitement, le signal est transmis du circuit analogique 25 au circuit logique 26, par trois liaisons 28a, 28b et 28c, assurant respectivement la transmission de l'énergie, de l'horloge et la fonction d'entrées sérielles. Le circuit logique 26 adresse des informations au circuit analogique 25, par la liaison 29 de type "sorties sérielles". Il introduit et va chercher des informations dans la mémoire 27, respectivement par les liaisons 30a et 30b.

Les commandes sont traitées par le circuit logique 26 à partir des informations reçues et de celles contenues dans la mémoire 27. Une réponse est adressée, par le circuit logique 26, au circuit analogique 25 pour qu'il envoie un signal de retour vers le lecteur 10.

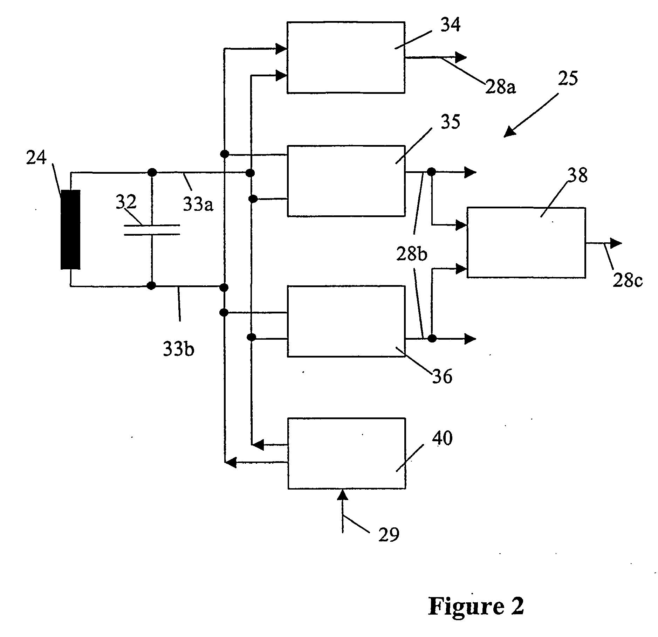

Comme le montre la figure 2, le circuit analogique 25 comporte un condensateur 32, un convertisseur de courant alternatif en courant continu 34, un extracteur d'horloge bas 35 et un extracteur d'horloge haut 36, un démodulateur 38 et un modulateur 40.

Le condensateur 32 forme, avec l'antenne 24, un circuit résonnant, dont la fréquence propre est ajustée sur la fréquence du signal Lx émis par le lecteur 10, et aux bornes duquel sont reliées, par les liaisons 33a et 33b, les entrées du convertisseur 34, des extracteurs 35 et 36, et les sorties du modulateur 40, de sorte que le signal reçu par le transpondeur est appliqué à chacun d'eux et que le signal transmis par le transpondeur est appliqué à l'antenne. Le démodulateur 38 reçoit, de l'antenne 24, son énergie au travers du convertisseur 34, et l'horloge et les commandes au travers des extracteurs 35 et 36.

On retrouve, sur cette figure, la liaison 28a d'alimentation, la liaison 28b d'horloge et la liaison 28c des entrées sérielles, formant les sorties du circuit analogique 25. On remarque également la liaison 29, entrées sérielles, qui permet d'adresser des informations du circuit logique 26 au circuit analogique 25 et plus particulièrement à son modulateur 40.

Le convertisseur 34 est, de manière bien connue de l'homme du métier, formé d'un redresseur à doubles alternances avec un grand condensateur d'énergie, alimentant un stabilisateur de tension. Il assure l'alimentation de l'ensemble des parties du transpondeur 12.

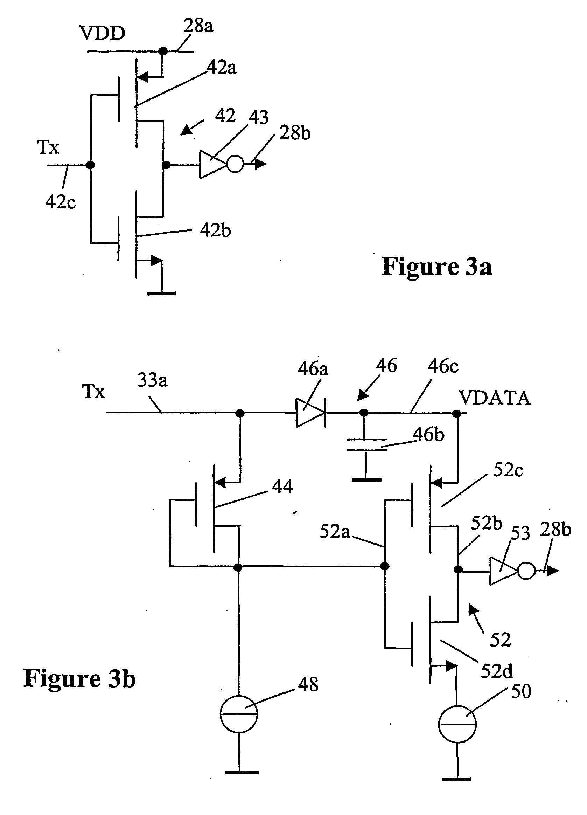

L'extracteur de type bas est réalisé au moyen de deux inverseurs simples 42 et 43 en série, comme représenté sur la figure 3a. L'inverseur 42 est formé d'un transistor PMOS 42a et d'un transistor NMOS 42b. Il est alimenté par une tension stabilisée VDD fournie par le convertisseur 34. L'antenne 24 applique le signal Tx à son entrée 42c. Les dimensions des transistors 42a et 42b sont calculées de manière à ce que la tension de seuil Ub à laquelle commute le circuit, soit voisine de 1V.

Un tel extracteur génère un signal d'horloge chaque fois que Tx est supérieur à 1V, ce signal s'interrompant lorsque Tx descend en dessous de ce niveau. En conséquence, le signal d'horloge s'interrompt.

Dans des conditions normales de fonctionnement, la tension de crête Txₘₐₓ est généralement de l'ordre d'une dizaine de volts. Avec un facteur de qualité de l'antenne compris entre 15 et 30, il faut environ 3 à 6 cycles après la pause pour que la tension Tx soit en permanence en dessous de 1V.

Il serait certes possible de dimensionner les transistors de manière à ce que la tension de seuil Ub soit plus élevée. Dans ce cas, toutefois, le transpondeur ne peut plus réagir normalement lorsque le signal reçu est voisin de Ub. Cela réduit, en conséquence, sa sensibilité.

La figure 3b représente, de manière plus détaillée, l'extracteur de type haut 36. Il est formé d'un transistor d'entrée 44, de type PMOS et d'un redresseur de valeur de crête 46, tous les deux reliés à l'antenne par la ligne 33a, de deux sources de courant 48 et 50 et de deux inverseurs 52 et 53, l'un 52 étant polarisé, l'autre 53 simple.

Plus précisément, le redresseur de valeur de crête 46 est formé d'une diode 46a et d'un condensateur 46b. Son entrée est reliée à l'antenne 24 par la liaison 33a et sa sortie 46c à l'inverseur 52 pour y appliquer une tension VData égale à la tension de crête Txₘₐₓ du signal reçu par l'antenne au travers de la liaison 33a.

L'inverseur 52 comporte une entrée 52a et une sortie 52b, et deux transistors PMOS 52c et NMOS 52d. L'entrée 52a est reliée à l'antenne 24 au travers du transistor 44 qui décale la tension de l'antenne vers le bas d'une valeur égale à sa tension de seuil. Le seuil de détection Uh de l'extracteur haut est décalé vers le bas par rapport à VData d'une valeur égale à la différence des tensions de seuil des transistors PMOS 44 et 52c. Ces derniers sont dimensionnés de manière telle que la tension de seuil du transistor 52c soit de quelques centaines de mV plus élevée que la tension de seuil du transistor 44. De la sorte, le signal d'horloge est interrompu dès que la tension du signal Tx reçu par l'antenne chute d'une valeur égale à la différence entre les deux tensions de seuil, quelle que soit la valeur de la tension de crête Txₘₐₓ.

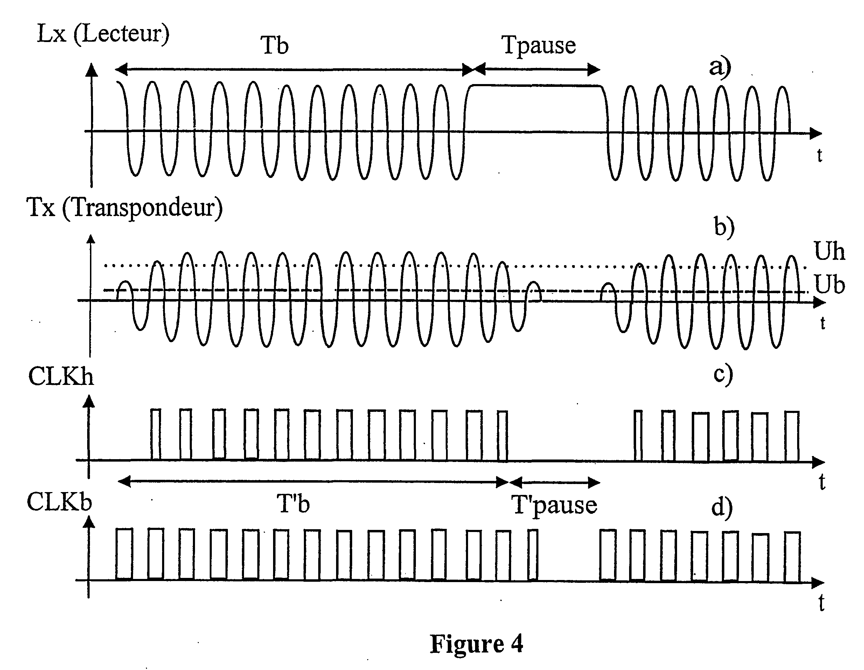

Pour bien comprendre le fonctionnement des extracteurs d'horloge, la figure 4 représente respectivement sur les lignes a, b, c et d, le signal Lx émis par l'antenne 14 du lecteur, celui Tx reçu par le transpondeur 12, ainsi que les signaux d'horloge haut CLKh et bas CLKb.

Sur la ligne a, on constate que l'antenne du lecteur émet un signal sinusoïdal, qui s'interrompt périodiquement, lorsque la tension est maximale.

Lorsque la tension du signal Lx devient constante, le signal Tx aux bornes de l'antenne 24 du transpondeur 12 décroît, comme on peut le voir sur la ligne b, plus ou moins rapidement, la vitesse étant d'autant plus faible que le facteur de qualité est élevé. La tension de crête Txₘₐₓ est d'autant plus élevée que le signal reçu est élevé. Toutefois, lorsque la tension dépasse une valeur limite, le signal est saturé.

Au début d'un signal Lx émis par le lecteur, les extracteurs de signaux d'horloge haut 36 et bas 35 répondent tous les deux très rapidement, comme on peut le voir sur les lignes c et d. Par contre, dans de mauvaises conditions de réception, le signal d'horloge haut CLKh peut n'apparaître qu'après plusieurs périodes du signal Lx émis par le lecteur. Lorsque le lecteur 10 interrompt l'émission du signal sinusoïdal, on constate que le signal Tx reçu par l'antenne 24 s'amortit lentement. Cela provient du fait que le facteur de qualité du circuit oscillant qu'elle forme avec le condensateur 32 doit être élevé.

A cause de cet amortissement lent, il faut plusieurs périodes avant que l'extracteur bas 35 ne réagisse, alors que le signal CLKh issu de l'extracteur haut 36 s'interrompt en synchronisme.

Il apparaît ainsi clairement que dans les cas où le signal reçu est régulier et intense, il suffit de disposer d'un extracteur haut dans le transpondeur pour pouvoir réduire considérablement le temps de pause. Par contre, lorsque le signal reçu ne sature pas, il est alors souhaitable de disposer d'extracteurs haut et bas, ce qui permet alors de garantir une pause de durée très courte. Il est ainsi possible de transmettre le maximum d'énergie et un nombre important d'informations même lorsque la fréquence de la porteuse est basse.

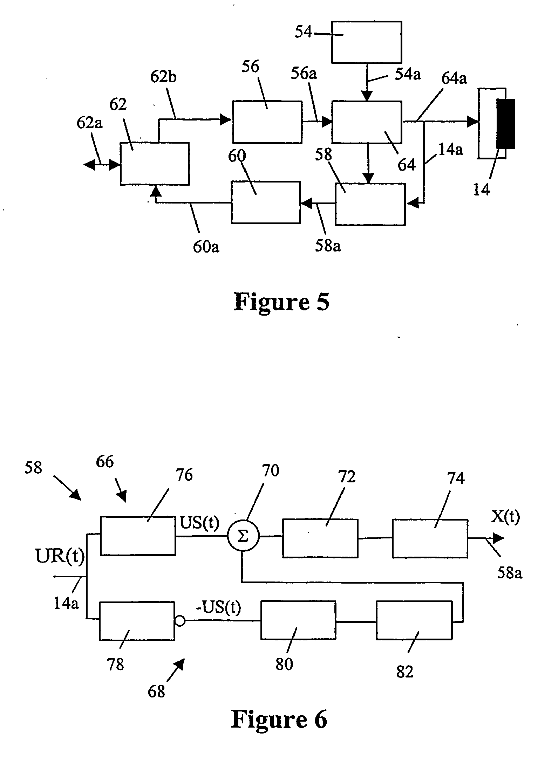

Les figures 5 et 6 montrent, de manière plus détaillée la structure de l'électronique de commande 16 équipant le lecteur 10.

L'électronique de commande 16 est formée d'une base de temps 54, d'un modulateur 56, d'un démodulateur 58, d'un décodeur 60, d'une interface de communication 62 et d'un circuit de commande 64.

La base de temps 54 est reliée au circuit de commande 64, par une liaison 54a, au travers de laquelle il délivre un signal sinusoïdal de fréquence constante, avantageusement comprise entre 9 et 150 kHz, qui sert de porteuse. Le circuit de commande 64 reçoit du modulateur 56, par une liaison 56a, des informations qui lui permettent de moduler le signal de la porteuse pour adresser des informations vers un transpondeur disposé dans le voisinage du lecteur, par l'intermédiaire de l'antenne 14 qui est reliée au circuit de commande 64 au moyen d'une liaison 64a.

L'antenne 14 est reliée au démodulateur 58 par une liaison 14a. Ainsi, lorsque le transpondeur répond aux informations du lecteur, le signal qu'il adresse, capté par l'antenne 14, est reçu par le démodulateur 58, au travers de la liaison 14a. Ce signal est traité par le démodulateur 58 et les informations qu'il contient sont adressées au décodeur 60 au travers d'une liaison 58a. Le décodeur 60 interprète ces informations sur la base de données en mémoires et les transmet à l'interface 62 au travers d'une liaison 60a. L'interface 62 est relié à l'extérieur, par une liaison 62a, formée par exemple d'une ligne RS 232, pour assurer la transmission de commandes et d'informations vers des interfaces homme-machine. Il est également relié au modulateur 56, par une liaison 62b.

Ainsi, lorsqu'un opérateur souhaite identifier un objet muni d'un transpondeur et disposé dans le champ du lecteur 10, il donne un ordre au moyen du clavier 20. Cet ordre est géré par l'ordinateur 18 et envoyé à l'électronique de commande 16 au travers de la liaison 62a. L'interface 62 adresse cet ordre au modulateur 56. Ce dernier coopère avec le circuit de commande 64 pour moduler le signal de la porteuse issu de la base de temps 54.

Comme cela a déjà été relevé plus haut, il est difficile de lire les signaux reçus par l'antenne 14, car ils sont de très faible niveau. Le démodulateur 58, représenté de manière détaillée à la figure 6, permet d'assurer une lecture efficace. Il comprend des premier et deuxième canaux 66 et 68, disposés en parallèle, un additionneur 70 relié aux sorties des canaux 66 et 68, un amplificateur-filtre 72 et un comparateur 74 disposés en série à la sortie de l'additionneur 70.

Le canal 66 est formé d'un multiplicateur 76. Le canal 68 comporte un multiplicateur de type inverseur 78, un filtre passe-bas 80 et un circuit d'échantillonnage 82.

Les deux canaux 66 et 68 sont reliés ensemble à l'antenne par la liaison 14a. Ils reçoivent donc, tous les deux, le signal UR(t) provenant de l'antenne 14. Ce signal modulé comporte deux composantes, l'une correspondant au signal émis et l'autre au signal capté, provenant du transpondeur. Le décodeur 58 a pour fonction d'extraire le signal X(t) qui correspond à la composante provenant du transpondeur.

Dans une première opération, le signal est multiplié par lui-même par les multiplicateurs 76 et 78, ce dernier inversant en outre le signal résultant. En d'autres termes, le signal US(t) issu du multiplicateur 76 est égal au carré de UR(t), alors que celui issu du multiplicateur 78 est égal, mais de signe inversé.

Le signal -US(t), issu du multiplicateur 78, est ensuite traité, de manière classique, au moyen du filtre passe-bas 80, puis par le circuit d'échantillonnage 82.

Dans le dispositif tel que décrit, le lecteur 16 est maître en regard du transpondeur. En d'autres termes, le lecteur peut savoir à tout moment quand un transpondeur est susceptible de répondre à une interrogation. Juste avant que ne commence le signal de réponse, le circuit d'échantillonnage 82 mémorise la valeur moyenne du signal -US(t - Δt) fournie par le filtre 80. C'est ce signal mémorisé qui est additionné au signal US(t). Le résultat de cette addition permet, après amplification et filtrage par l'amplificateur-filtre 72, puis comparaison par le comparateur 74, d'extraire X(t), qui comporte toutes les informations issues du transpondeur, alors que le signal provenant de la porteuse a été éliminé.

Ainsi, grâce au fait que les transpondeurs selon l'invention sont munis d'un extracteur haut, de plus associé à un extracteur bas, il est possible de réduire au minimum les interruptions du signal émis par l'antenne 14, porteuses des informations à transmettre, et ainsi assurer des conditions optimales de transmission d'informations et d'énergie entre le lecteur et les transpondeurs, même dans des conditions particulièrement défavorables, par exemple en présence d'un écran métallique compris entre les antennes 14 et 24.

## Revendications

1. Transpondeur (12) radio-fréquence, pour une identification sans contact au moyen d'un lecteur (10), comprenant:
une antenne (24),
un circuit analogique (25) qui comporte un condensateur (32), un convertisseur de courant alternatif en courant continu (34), un modulateur (40) et un démodulateur (38),
un circuit logique de commande (26), et
une mémoire (27),
ledit transpondeur (12) étant agencé de manière à ce que:
l'antenne (24) et le condensateur (32) forment, ensemble, un circuit résonnant,
l'antenne (24) reçoit un premier signal (Tx) provenant dudit lecteur (10) et de type sinusoïdal, présentant une tension de crête modulé, porteur de commande et fournissant un signal d'horloge, et émet un deuxième signal porteur d'une réponse auxdites commandes,
ledit convertisseur (34) transforme le premier signal (Tx) en un signal redressé, pour assurer l'alimentation du transpondeur (12),
**caractérisé en ce que** ledit circuit analogique (25) comporte, en outre, deux extracteurs d'horloge, le premier de type haut (36), le deuxième de type bas (35), agencés de manière à ce que l'extracteur de type haut (36) traite le premier signal (Tx) pour en extraire le signal d'horloge adressé au démodulateur (38) tant que la tension de crête de ce signal (Tx) dépasse une première valeur de seuil, et que l'extracteur de type bas (35) définit une seconde valeur de seuil plus basse que la première valeur de seuil, lesdits extracteurs étant agencés de manière à ce qu'une transmission du signal d'horloge au démodulateur soit interrompue dès que la tension de crête du premier signal chute en dessous de ladite première valeur de seuil, caractéristique du premier extracteur, et qu'une transmission du signal d'horloge au démodulateur soit rétablie dès que ladite tension dépasse ladite deuxième valeur de seuil, caractéristique du deuxième extracteur.

2. Transpondeur selon la revendication 1, **caractérisé en ce que** l'extracteur de type haut (36) comporte:
un transistor d'entrée (44) de type PMOS et relié à l'antenne (24)
un inverseur polarisé (52) comportant deux transistors l'un de type PMOS (52c) et l'autre de type NMOS (52d), muni d'une entrée (52a) et d'une sortie (52b), et commandé par le transistor d'entrée,
un redresseur de valeur de crête (46), formé d'une diode (46a) et d'un condensateur (46b),
deux sources de courant (48, 50) alimentant respectivement le transistor d'entrée (44) et l'inverseur polarisé (52), et
un inverseur simple (53),
dans lequel le redresseur de valeur de crête (46), comporte une entrée (33a) reliée à l'antenne (24) et une sortie (46c) reliée à l'inverseur polarisé (52) pour lui appliquer une tension d'alimentation (VData) égale à la tension de crête (Txₘₐₓ) du premier signal (Tx) et dans lequel l'entrée (52a) de l'inverseur polarisé (52) est reliée à l'antenne (24) au travers du transistor d'entrée (44) qui décale le signal (Tx) vers le bas, l'extracteur de type haut (36) étant agencé de manière à ce que son seuil de détection (Uh) est défini par la tension d'alimentation (VData) décalée vers le bas d'une valeur égale à la différence de tension définie par les tensions de seuils des deux transistors PMOS (52c) et (44), de telle sorte que la transmission du signal d'horloge au démodulateur est interrompue dès que la tension de crête (Txₘₐₓ) du premier signal (Tx) chute en dessous du seuil de détection (Uh).

## Claims

1. Radio-frequency transponder (12) for contactless identification by means of a reader (10), including:
an antenna (24),
an analogue circuit (25) that includes a capacitor (32), an AC-DC converter (34), a modulator (40) and a demodulator (38),
a logic control circuit (26), and
a memory (27),
said transponder (12) being arranged such that:
the antenna (24) and the capacitor (32) together form a resonating circuit,
the antenna (24) receives a first signal (Tx) originating from said reader (10) and of the sinusoidal type, which has a peak voltage (Txₘₐₓ) and is modulated, carries commands, provides a clock signal and, transmits a second signal carrying a response to the commands,
said converter (34) converts the first signal (Tx) into a rectified signal in
order to power the transponder (12)
**characterized in that** said analogue circuit (25) further includes two clock extractors, a first one of the high level type (3), a second one of the low level type (36), arranged such that the high level type extractor (36) processes the first signal (Tx) in order to extract therefrom said clock signal addressed to the demodulator (38) as long as the peak voltage of this signal (Tx) exceeds a first threshold value, and such that the low level type extractor (35) defines a second threshold value lower than the first threshold value, said extractors being arranged such that transmission of the clock signal to the demodulator is interrupted as soon as the peak voltage of the first signal drops below said first threshold value, characteristic of the first extractor, and such that said transmission of the clock signal to the demodulator is re-established as soon as said voltage exceeds said second threshold value, characteristic of the second extractor.

2. Transponder according to claim 1, **characterized in that** the high level type extractor (36) includes:
a PMOS type input transistor (44) connected to the antenna (24),
a polarized inverter (52) including two transistors, one of the PMOS type (52c) and the other of the NMOS type (52d), provided with an input (52a) and an output (52b), and controlled by the input transistor,
a peak value rectifier (46), formed of a diode (46a) and a capacitor (46b),
two current sources (48, 50) respectively powering the input transistor (44) and the polarized inverter (52), and
a simple inverter (53),
wherein the peak value rectifier (46) includes an input (33a) connected to the antenna (24) and an output (46c) connected to the polarized inverter (52) to apply thereto a supply voltage (VData) equal to the peak voltage (Txₘₐₓ) of the first signal (Tx) and in which the input (52a) of the polarized inverter (52) is connected to the antenna (24) through the input transistor (44), which offsets the signal (Tx) downwards, the high level type extractor (36) being arranged such that its detection threshold (Uh) is defined by the supply voltage (VData) offset downwards by a value equal to the voltage difference defined by the threshold voltages of the two PMOS transistors (52c) and (44), such that said transmission of the clock signal to the demodulator is interrupted as soon as the peak voltage (Txₘₐₓ) of the first signal (Tx) drops below the detection threshold (Uh).

## Patentansprüche

1. Radiofrequenz-Transponder (12) zur kontaktlosen Identifikation über ein Lesegerät (10), der:
- eine Antenne (24)
- einen analogen, seinerseits einen Kondensator (32), einen Gleichrichter (34), einen Modulator (40) und einen Demodulator (38) umfassenden Schaltkreis (25),
- einen logischen Steuerkreis (26), und
- einen Speicher (27) umfasst,
wobei der besagte Transponder (12) so ausgelegt ist, dass:
- die Antenne (24) und der Kondensator (32) zusammen einen Resonanzkreis bilden,
- die Antenne (24), vom besagten Lesegerät (10) aus ein erstes, sinusförmiges, als Befehlsträger und Taktquelle moduliertes Signal (Tx) mit einer Spitzenspannung (Txₘₐₓ) empfängt und ein zweites Signal als Träger einer Antwort auf die besagten Befehle aussendet, und
- der besagte Gleichrichter (34) das erste Signal (Tx) in ein gleichgerichtetes Signal umwandelt, um die Stromversorgung des Transponders (12) zu gewährleisten,
**dadurch gekennzeichnet, dass** der besagte analoge Schaltkreis (25) überdies zwei Taktextraktoren, und zwar einen ersten des Hochpegel-(36) und einen zweiten des Tiefpegel-Typs (35) umfasst, die so ausgelegt sind, dass der Hochpegelextraktor (36) das erste Signal (Tx) verarbeitet, um daraus das an den Demodulator (38) adressierte Taktsignal zurückzugewinnen solange die Spitzenspannung dieses Signals (Tx) einen ersten Schwellenwert übersteigt, und dass der Tiefpegelextraktor (35) einen zweiten, tiefer als der erste liegenden Schwellenwert bestimmt, wobei die besagten Extraktoren so ausgelegt sind, dass eine Taktsignalübertragung an den Demodulator unterbrochen wird, sobald die Spitzenspannung des ersten Signals unter den besagten ersten, für den ersten Extraktor charakteristischen Schwellenwert abfällt, und dass eine Taktsignalübertragung an den Demodulator wiederhergestellt wird, sobald die besagte Spannung den besagten zweiten, für den zweiten Extraktor charakteristischen Schwellenwert übersteigt.

2. Transponder nach Anspruch 1, **dadurch gekennzeichnet, dass** der Hochpegel-Extraktor (36) :
- einen mit der Antenne (24) verbundenen Eingangstransistor (44),
- einen seinerseits zwei Transistoren, und zwar einen vom Typ PMOS (52c) und einen anderen vom Typ NMOS (52d), umfassenden, mit einem Eingang (52a) und einem Ausgang (52b) versehenen und durch den Eingangstransistor gesteuerten polarisierten Inverter (52),
- einen durch eine Diode (46a) und einen Kondensator (46b) gebildeten Spitzenwertgleichrichter (46),
- zwei den Eingangstransistor (44) respektive den polarisierten Inverter (52) versorgende Stromquellen (48, 50), und
- einen einfachen Inverter (53) umfasst,
in welchem der Spitzenwertgleichrichter (46) seinerseits, zu seiner Versorgung mit einer, der Spitzenspannung (Txₘₐₓ) des ersten Signals (Tx) entsprechenden Speisespannung (VData), einen mit der Antenne (24) verbundenen Eingang (33a) und einen mit dem polarisierten Inverter (52) verbundenen Ausgang (46c) umfasst, und in welchem der Eingang (52a) des polarisierten Inverters (52) über den das Signal (Tx) nach unten verschiebenden Eingangstransistor (44) mit der Antenne (24) verbunden ist, wobei der Hochpegel-Extraktor (36) so ausgelegt ist, dass seine Erkennungsschwelle (Uh) durch die um einen, von der Spannungsdifferenz der Schwellenspannungen der beiden PMOS-Transistoren (52c) und (44) bestimmten Wert nach unten verschobene Versorgungsspannung (Vdata) definiert wird, sodass die Taktsignalübertragung an den Demodulator unterbrochen wird, sobald die Spitzenspannung (Txₘₐₓ) des ersten Signals (Tx) unter die Erkennungsschwelle (Uh) abfällt.
